# EUROPEAN PATENT APPLICATION

(11) **EP 3 249 574 A1**
(43) Date of publication of application: **29.11.2017**
(21) Application number: 16170924.1
(22) Date of filing: 23.05.2016
(51) Int. Cl.: G06K 9/00

(54) **AUTOMATED CONTROL OF THE IDENTITY OF A PERSON HOLDING AN ELECTRONIC MACHINE-READABLE TRAVEL DOCUMENT**

(71) Applicant: GEMALTO SA, 92190 Meudon (FR)
(72) Inventor: Petteri, Hamalainen, 92190 MEUDON (FR)
(74) Representative: Cassagne, Philippe M.J.

(57) **Abstract**

There is disclosed a method of automatically and sequentially verifying identity of persons each holding an electronic Machine-Readable Travel Document, eMRTD. The method comprises retrieving (44) from an eMRTD (14) information including a portrait image of the legitimate holder digitally stored on the eMRTD; digitally acquiring (47) at least one live portrait photograph of the person presenting the eMRTD, using a backdrop (60) which is selected (46) from a set of different backdrops, each time for one photograph acquisition only; comparing (48) the acquired live portrait photograph with the portrait image retrieved from the eMRTD, by performing a facial recognition process; comparing (49) the backdrop used for acquiring the live portrait photograph with the backdrop of the acquired live portrait photograph; and, determining that the person is the legitimate holder of eMRTD if, and only if both steps of comparing give a matching result.

## Description

### BACKGROUND

The present invention generally relates to automated control of the identity of a person holding an electronic Machine-Readable Travel Document, eMRTD, with specific focus on photo fraud prevention.

It finds applications, in particular, in border management technologies which have the dual objective of enhancing security while facilitating cross-border travels for users.

### Related Art

For more than a decade, most countries have been including biometric data (mainly digital photographs and/or fingerprints) in their passports. Automated Border Control (ABC) gates, also known as e-Gates, are electronically controlled gates designed as self-service systems that enable traveller clearance without any direct service employee involvement. This allows enhancing passenger throughput rates for security control in airports, for instance, without increasing staff costs.

The European Agency for the Management of Operational Cooperation at the External Borders of the Member States of the European Union (Frontex) issued a report which will be referred to in the following as the Frontex ABC guidelines: "Best Practice Operational Guidelines for Automated Border Control (ABC) Systems - Research and Development Unit", online version TT-02-16-152-EN-N, September 2015, ISBN 978-92-95205-50-5, DOI 10.2819/39041 (http://frontex.europa.eu/publications/).

Frontex ABC guidelines are the result of a collaborative effort among EU Member States (coordinated by Frontex) who, at the time of writing, had an operational or piloting ABC system in place. More precisely, this report was prepared by the Research and Development Unit (RDU) of Frontex in close collaboration with experts from a number of EU Member States which, at the time of writing, were operating or testing an ABC system at a number of Border Crossing Points (BCPs) of the European Union and other stakeholders.

According to the Frontex ABC guidelines, an ABC gate is operable to retrieve biometric data from the passport chip in order to compare it with biometrics captured live from the traveller. If the two sets of biometrics match, the traveller will be able to proceed through the gate. The same principles apply regardless of the biometrics concerned.

The present invention focuses on identification processes which make use of facial features as applicable biometrics.

The efficiency of ABC gates is based on the interaction of the system with users who just have to get their passport scanned and their facial image captured successfully. A user is authenticated by comparing the digital photograph stored in his or her passport chip, with a live photograph of said user captured by a camera arranged at the gate itself. More specifically, the system is designed for verifying the identity of the person holding the passport by comparing facial features in the portrait photo of the legitimate passport holder digitally stored in the passport chip, with corresponding features in the live photograph of the person holding the passport at the gate.

At least in some of the existing ABC gates, however, it is possible for an impostor to bypass this security control by showing the photograph printed on the data page of the passport to the camera, namely by just keeping the data page close to the camera lens during the image acquisition. This makes it possible that an illegitimate holder of the passport, *i.e.* an impostor, goes through the gate.

It is likely that the operators, *e.g*. the border officers in the above example of an ABC gate, cannot detect this fraud as the fraudulent person does not have to carry any additional irrelevant items with him/her in order to circumvent this security check.

Besides, it is to be noted that, assuming the imposter shows the eMRTD data page for the camera, the real backdrop cannot be seen in the live photo because the data page itself covers and blocks the direct view of the backdrop.

### SUMMARY

Embodiments of the invention allow improving the situation, by proposing means for preventing that kind of photo fraud.

More precisely, a first aspect of the invention relates to a method of automatically and sequentially verifying identity of persons each holding an electronic Machine-Readable Travel Document, eMRTD, said method comprising:
- retrieving from an eMRTD presented by a person the identity of whom is to be verified, information associated to a legitimate holder of the eMRTD, said identity information including a portrait image of said legitimate holder digitally stored on the eMRTD;
- digitally acquiring at least one live portrait photograph of the person, using a backdrop which is selected from a set of different backdrops, each time for one photograph acquisition only;
- comparing the acquired live portrait photograph of the person holding the eMRTD with the portrait image retrieved from said eMRTD, by performing a facial recognition process on said live portrait photograph and said portrait image, in the digital domain;
- comparing the backdrop used for acquiring the live portrait photograph of the person holding the eMRTD with the backdrop of the acquired live portrait photograph; and
- determining that the person holding the eMRTD is the legitimate holder of the eMRTD if, and only if both steps of comparing give a matching result.

Stated otherwise, the backdrop of the photo captured by the camera is used as a control variable for making sure that the captured photo is a live photo of the person standing at the ABC gate and holding the eMRTD.

Assuming that, as the result of the face recognition carried out, the photograph retrieved from the ID document chip matches the live photograph taken by the machine, this definitely means that the person standing at the ABC gate is the person it is supposed to be, namely the person of whom the biometric data are actually stored in the eMRTD chip. Indeed, would the live photo be a simple copy of the photo of that legitimate user as shown on the eMRTD data page, then the backdrop of said live photo would fail to match the backdrop selected by the machine for the live photo acquisition.

Thus, embodiments of the present invention improve the reliability of electronic control gates, such as ABC gates, by preventing one way of cheating the e-Gate.

A second aspect of the invention relates to a computer program product comprising one or more stored sequences of instructions that are accessible to a processor and which, when executed by the processor, cause the processor to carry out the steps of the method of the first aspect.

Finally, a third aspect proposes an automated system for sequentially verifying identity of persons each holding electronic Machine-Readable Travel Document, eMRTD, said system comprising:
- a document reader adapted to retrieve from an eMRTD presented by a person the identity of whom is to be verified, information associated to a legitimate holder of the eMRTD, said identity information including a portrait image of said legitimate holder digitally stored on the eMRTD;
- a camera adapted to digitally acquire at least one live portrait photograph of the person,
- computer means adapted to:
   - select a backdrop from a set of different backdrops, said backdrop being used each time for one photograph acquisition only;
   - compare the acquired live portrait photograph of the person holding the eMRTD with the portrait image retrieved from said identity document, by performing a facial recognition process on said live portrait photograph and said portrait image, in the digital domain;
   - compare the backdrop used for acquiring the live portrait photograph of the person holding the eMRTD with the backdrop of the acquired live portrait photograph; and
   - determine that the person holding the eMRTD is the legitimate holder of the eMRTD if, and only if both steps of comparing give a matching result.

According to preferred embodiments, taken alone or in combination;
- the backdrop can be randomly changing from one live photograph acquisition to the other, in a sequence of live photograph acquisitions;
- the live portrait photograph of the person can be acquired while the selected backdrop is being displayed on a display screen behind said person, with respect from a camera used for the live photograph acquisition; or, in a variant,
- the live portrait photograph of the person can be acquired while the selected backdrop is being projected on a panel behind said person, with respect from a camera used for the live photograph acquisition;
- the set of different backdrops can comprise backdrops with respective machine-identifiable solid colors;
- the set of different backdrops can comprise backdrops with respective machine-identifiable patterns;
- the set of different backdrops comprises backdrops with respective combinations of one solid color out of a set of different machine-identifiable solid colors and one pattern out of a set of different machine-identifiable patterns;
- comparing the backdrop used for acquiring the live portrait photograph of the person holding the eMRTD with the backdrop of the acquired live portrait photograph can comprise processing a reference block of the live photograph corresponding to the background;
- the portrait image of the legitimate holder of the identity document can be retrieved from an eMRTD chip;
- the eMRTD chip can be a contactless chip; and/or,
- the e-MRTD can be a biometric e-Passport and the method is implemented at an Automated Border Control, ABC, gate.

### BRIEF DESCRIPTION OF THE DRAWINGS

Embodiments of the present invention are illustrated by way of example, and not by way of limitation, in the figures of the accompanying drawings, in which like reference numerals refer to similar elements and in which:
- Figure 1 is a diagram illustrating a one-step process of verifying the identity of an eMRTD holder at an e-Gate;
- Figure 2 is a diagram illustrating an integrated two-step process of verifying the identity of a eMRTD holder at an e-Gate;
- Figure 3A and 3B are diagrams illustrating a segregated two-step identity verification process;
- Figure 4 is a flow chart showing steps of an embodiment of the proposed method;
- Figures 5, 6 and 7 show different examples, respectively, of the backdrop of a portrait photograph of the eMRTD holder acquired by the machine according to embodiments of the proposed method.

### DESCRIPTION OF PREFERRED EMBODIMENTS

ABC is defined as the use of automated or semi-automated systems which can verify the identity of persons, like travellers crossing any border at, e.g., Border Crossing Points (BCPs), without the need for human intervention. Most of the ABC systems currently in operation are based on the use of electronic Machine-Readable Travel Documents (eMRTD) and rely on facial recognition for biometric verification.

In short, an ABC system performs the following tasks, which correspond to the ones performed by a border officer in the manual border control, but with a very high degree of automation:
- Check that the traveller trying to cross the border is carrying a genuine and valid eMRTD. This is more formally referred to as the "document authentication process", which can be achieved by executing certain authentication algorithms combined with data and secret keys inside the chip;
- Verify biometrically that this eMRTD belongs to the traveller trying to cross the border. This is more formally referred to as the "identity verification process";
- Check that the traveller is indeed entitled/authorized to cross the border, e.g. by checking applicable databases based on the traveller biometrics and/or identity information retrieved from the eMRTD;
- Allow/deny passage according to a pre-defined logic, sometimes requiring the intervention of the border guard operating the system;
- Guarantee the security in the overall process, meaning that only a traveller who has been cleared is allowed to cross the border (*i.e.,* no tailgating), and that travellers who have been rejected are properly handled (e.g. refused in order to be redirected to the manual control where they are handled by border officers and). This is typically achieved by the usage of single or double automatic barriers (e-Gates) and tailgating detection/prevention mechanisms.

Embodiments of the invention pertain specifically to the above-mentioned identity verification process.

E-gates are sophisticated machines which consist of many components: physical barriers (e.g. glass doors), an electronic document reader, biometric capture devices, user interfaces (monitors, LED signals, monitoring stations, etc.), surveillance cameras e.g. Closed-Circuit Television (CCTV) cameras which can produce images or recordings for surveillance purposes, and possibly further sensors for left luggage detection purposes, for instance. Such a machine can be used for verifying the identity of departing passengers in airports, somewhere between checking and boarding points. Also, machines of that kind can be made available for travellers arriving at an airport, for instance at the exit/transfer side of a terminal, in order to carry out border control before allowing entry of travellers into the country of arrival.

E-Gates require users to present machine-readable documents, for instance Electronic Machine-Readable Travel Document (e-MRTD) such as electronic passports (e-Passports) or electronic identity cards (e-ID cards), which are used, e.g. for international travel. It will be appreciated that this list is not limiting, and that the form of the eMRTD may vary from one application to the other. For instance, it can be a paper document (*e.g*. a passport booklet or an identity card in the form of a plastic card), or any electronically-readable medium convenient for the application concerned.

The eMRTD can have a machine-readable electronic chip storing the legitimate holder's identification details, including a digital portrait image of the legitimate holder, along with mandatory identity elements reflected in, *e.g.* an additional two- line machine-readable zone (MRZ) on the data page of the eMRTD. The chip can be a contact or contactless chip, for instance. For example, it can be an electronic chip embedded in the back cover of the passport booklet. Again, it will be appreciated by the one with ordinary skills in the art that embodiments are not intended to be limited by technology-related aspects of the data storing medium, inasmuch as the medium is capable of executing eMRTD related algorithms.

In addition, eMRTD of the above type carry a photograph of the legitimate holder for the purpose of manual identity verification. However, it will be appreciated that this printed photo is not used for the purpose of the automated verification according to the proposed embodiments.

Embodiments of the invention are compliant with security checks in accordance with the above-identified Frontex ABC guidelines. According to Frontex ABC guidelines, there are different systems currently in use which are based on respective identity verification schemes: one-step processes, integrated two-step processes with single or double door e-gates, and segregated two-step processes. In all of the three above cases, travellers are required to scan their eMRTD and to go through a facial recognition system. Embodiments of the invention can be implemented within the framework of anyone of them.

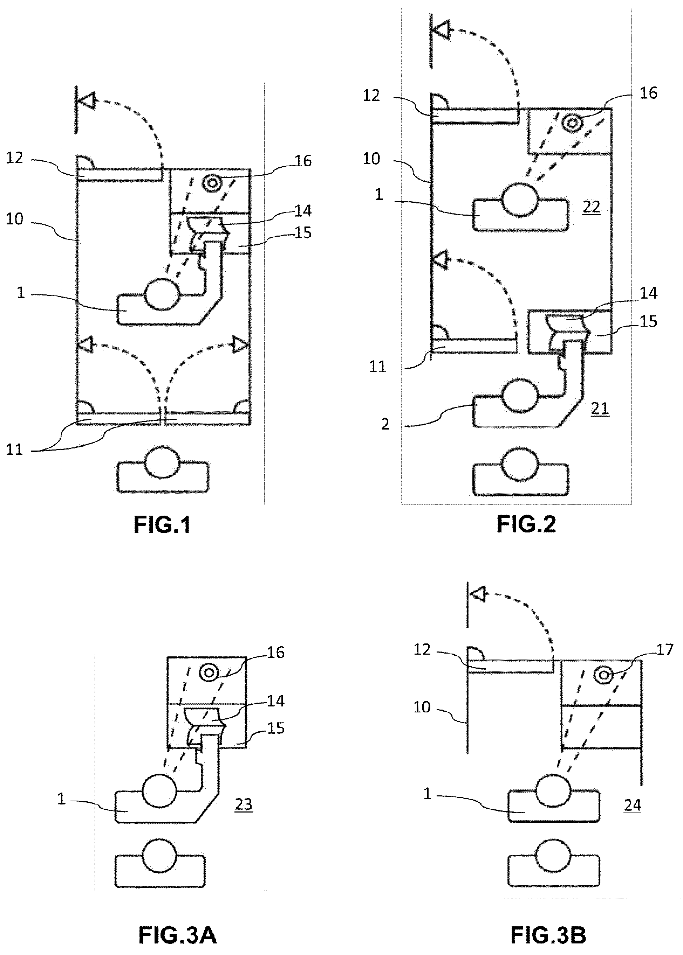

Figure 1 schematically shows an e-Gate designed for being operated according to a one-stop process. Such process combines the verification of travellers and their secure passage through the border.

This design allows a traveller 1 to complete the whole transaction in one single process carried out at a single control booth 10 without the need to move to another stage. Said control booth comprises an electronic document reader 15 for scanning the eMRTD 14 hold by the traveller 1, and a digital camera 16 for performing the live photograph acquisition. This equipment is preferably positioned at a height which makes them easy to reach by the majority of travellers (average elbow- height), and placed for instance on the right hand side of the e-Gate.

Advantageously, the booth 10 is designed as a mantrap, so that any traveller who has accessed the booth through entry physical barriers 11 can be allowed to proceed out of the booth through exit physical barriers 12 only once authenticated. On the contrary, a traveller who has been rejected is forced to wait in the closed booth 10 for a border officer to arrive, in order to be properly handled.

With reference now to Figure 2, with an e-Gate designed for being operated according to an integrated two-stop process a traveller will initiate the verification of the eMRTD at the first stage 21, where the electronic document reader 15 is provided. And then, if this eMRTD verification step is successful, the traveller 1 will move to a second stage 22, for instance a booth structurally comparable to booth 10 of Figure 1. This booth, indeed, forms the e-Gate itself where the facial feature biometric match is carried out thanks to the camera 16. In some embodiments, other applicable checks can be further executed in this booth.

It will be appreciated that the integrated two-step process is nothing more than a variation on the one-step design described above with reference to Figure 1. The difference between the two topologies yields in an integrated two-step process providing higher throughput rates in normal condition of use. Indeed, a second traveller 2 can initiate the verification of his/her eMRTD at the first stage 21 while a first traveller 1, who has already completed this verification step, can proceed to the second stage 22 for performing the facial recognition test.

Finally, Figures 3A and 3B illustrate an e-Gate designed for carrying out a segregated two-step process. It will become apparent that the process of traveller verification and their passage through the border control are completely separated.

Indeed, with reference to Figure 3A, first, the traveller 1 is requested to stand at a first stop 23, where the verification of his/her eMRTD 14 is initiated, e.g. by reading the passport with the electronic document reader 15. In addition, a tactical biometric can captured, *e.g*. a live photograph of the traveller can be taken with a first camera 16. In a variant, a token can be issued, in addition to the portrait image capture being completed.

This first stage typically takes the form of a biometric data acquisition and document authentication kiosk. Fundamental functionalities of this kiosk include using the automated passport reader 15 to read the chip of user passports to retrieve the digital portrait image of the legitimate holder's, along with additional identification details of the legitimate holder being read from the machine readable zone (MRZ) of the passport. To that end, the user is simply required to place his/her passport properly on an electronic document reader 15 to allow for the passport chip to be read.

In parallel to the ID document authentication process being performed, the user identity verification process is carried out by computer means 10 based on the stored image data read from the eMRTD chip, and on the live image acquired by the camera 16.

Turning now to Figure 3B, the traveller then proceeds to a second stop 24, namely to the e-Gate 10 as shown in Figure 3B, where the tactical biometric is checked thanks to a second camera 17. Such being the case, the token is also checked to allow border crossing by the correct traveller, namely the one whose identity has been successfully verified based on the eMRTD scanned and the live photograph acquired at the first stop 23.

State otherwise, the live photograph acquisition and e-MRTD authentication process is carried out at the first stop 23, whereas the effective identity control and traveller clearance process is carried out, downstream, at the second stop 24. The tactical biometric and the token are alternative or cumulative means to map the two processes, so that the latter is executed with respect to the same traveller as the former, thus keeping the machine synchronized with respect to the queuing travellers and avoiding any mix-up between both processes.

It will be appreciated that the above described segregated two-step process allows speeding-up the control and thus increasing the traveller throughput rate further, since data processing associated to user identification can be performed independent of the presence of the user at a specific stop. Stated otherwise, data processing is performed while travellers in a queuing line proceed from the first stop 23 to the second stop 24.

In all of the ABC gates of the above described type, there is performed a check of the live captured photo against the photo of the legitimate user stored in the e-Passport chip.

Embodiments of the invention improve the reliability of such electronic control gates, amongst others, by preventing an impostor cheating the e-Gate by showing the photograph printed on the data page of the passport to the camera in charge of the live photograph acquisition.

Facial recognition results are greatly affected by the quality of the photo. In particular, better quality photos yield more accurate matching results. This is the reason why, in the standard state of the art, there is a white backdrop behind the face of the person when that person stands at the control gate in a position ready for a live portrait photo to be taken by the camera. This backdrop has the function of providing a uniform background for the photo taken by the gate, and hence to help making facial recognition easier and faster.

The idea behind embodiments of the present invention is to use an illuminated backdrop that randomly changes aspect, for example is selected out of a set of colors (*i.e.,* tones different from uniform white), from one photo acquisition to the other.

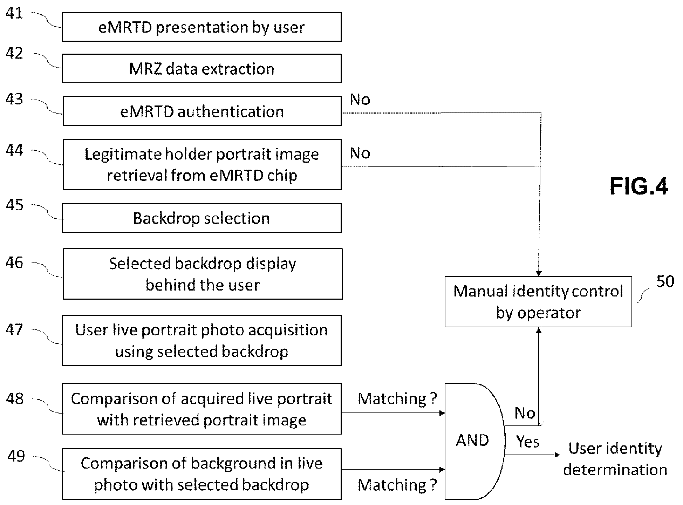

Figure 4 is a flow chart illustrating steps of an embodiment of the method of identifying the ID document holder at an ABC gate or any other type of e-gate.

At 41, the user is invited to present his/her ID document and have it scanned by the electronic document reader.

The general principle is that, if any of the following step cannot be performed successfully for ant operational or technical reason or if the traveller fails any of the following checks, then he/she will be rejected by the machine and, at 50, will see an officer in the traditional manual process.

At 42, the biographical data is read from the MRZ. If the MRZ cannot be read successfully, then the traveller will be rejected and the overall process will be carried out manually by a border officer, at 50.

Else, the automated method proceeds with the document authentication process at 43. For example, this process can comprise Passive Authentication to make sure that the contents are valid and Active Authentication to make sure that the document is genuine. Corresponding algorithms can be executed in combination with data and secret keys inside the chip.

Unless the above mentioned document authentication process has failed, whereby the traveller would be handled according to the manual control process at 50, the automatic user identification process is then carried out as will become apparent from the following description of embodiments of the proposed method.

More specifically, at 44 biometrics are retrieved from ID document the chip, in particular the image data corresponding to the legitimate user portrait picture.

It will be noted that the reference photo of the legitimate passport holder is stored in the e-Passport chip in a so called biometric data block which allows storing some additional data like gender, eye color, hair color, etc. This can help in the facial recognition process which will be detailed below. However, typically these values are not set in e-Passports currently in use, and thus ABC systems implementing embodiments of the invention cannot expect this data to be available.

In one example, the photo is in the jpeg format. However, it will be appreciated that using or any other format such as jpeg2000 is also allowed without departing from the scope of the invention. Further, image conversion into another format suitable for any specific application is also an option, for instance to accommodate for the use of any specific type of camera which is used to capture the live photograph.

At 45, a given backdrop is selected by the machine, for being used as a background for the purpose of acquiring the live photograph of the traveller. In embodiments, indeed, the e-Gate camera changes the backdrop just before it takes a new live photo. This can be achieved, preferably, by randomly selecting one of the supported backdrops.

In one embodiment the backdrop supports, for example, a plurality of different colors and a plurality of different patterns, and any combination thereof. Stated otherwise, a set of various patterns can be combined with the set of available colors when performing a backdrop selection, preferably a random selection.

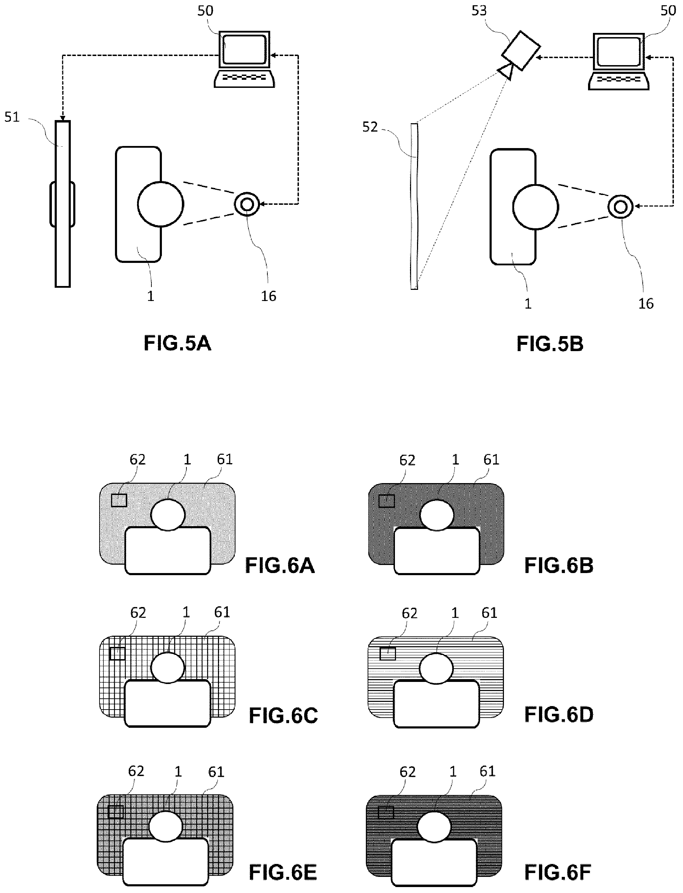

Reverting back to Figure 4, at 46 the selected backdrop is displayed behind the user. This can be achieved, for instance using a digital display 51 as shown in Figure 5A, under the control of a control unit 50. This digital display can be, for instance, a flat screen, e.g. a Liquid Cristal Display (LCD), of sufficient size.

With reference to another embodiment as shown in Figure 5B, the display of the selected background can also be obtained on a passive screen 52 such as a white panel or curtain, by use of an image projector 53 such as a video projector of any suitable type, under the control of the control unit 50.

The control unit 50 can be a general purpose computer, for instance, or a dedicated software component run on hardware computer means of the e-Gate.

At 47, a live photograph of the traveller 1 is taken by the camera 16 as shown in any one of Figures 1, 2 and 3A, which also to be seen in Figures 5A and 5B. With reference to these two latter drawing Figures, the one with ordinary skills in the art will appreciate that the camera 16 can be controlled by the control unit 50 of Figures 5A and 5B. The photo can be a so-called token frontal image, when the eyes are in fixed positions, which helps automatic facial recognition.

At 48, indeed, a facial recognition algorithm is carried out on both the portrait image retrieved from the ID document at 44 and the live photograph acquired at 47.

This step allows comparing the face of the legitimate passport holder with the face of the traveller recognised from the live photograph. Each photo goes through an electronic scanning process executed by a dedicated software running in the control unit 50, for instance. For example, this process is adapted to locate landmarks on the person's face, such as the eyes, nose and mouth, or the particular type of eyelid, for instance.

In order to enhance performance of this facial recognition process, the camera and its associated optical system can be so designed and operated that the facial image obtained at 47 show minimum dimensions of the user face, and so that the user face occupies a significant area within the image frame. In one example, the minimum frame height and width can be of 45 mm (1" ¾) and 35 mm (1" ⅜), respectively. In addition, the face height can be required to be comprised, for instance, in the range between 31 mm (1" ¼) and 36 mm (1" /1₆).

In addition, at 49 a reference block of the live photograph corresponding to the background is processed to analyse the image content, e.g. the color and/or pattern contained therein. The aim of this step is to recognize the photograph's background and to make sure it matches the backdrop which has been selected at 45 and displayed behind the traveller 1 while the live photograph has been acquired at 47.

As shown in Figures 6A-6F, which will be further described in more details below, the reference block 62 of the live photograph can be selected in, *e.g.* the top left corner of the live photograph, or in the top right corner of the backdrop 61 of the live photograph. Indeed, these are image areas which can be assumed, with a certain level of confidence, to reflect the expected backdrop. Namely, the reference block 62 is comprised in an image area whose position is near the user head, given the conditions of the portrait image acquisition, to make sure that if the backdrop is partly visible behind the data page when an imposter have his eMRTD scanned instead of a live portrait photograph being acquired, the reference block 62 is not in that area. It will be appreciated that the camera and face recognition system can detect the position of the head, at least for the purpose of making the face recognition possible. This is further based on the assumption that the traveller 1 shall stand in a such position when the live photograph is taken at 47 that his/her portrait will appear in the middle of said live photograph. Stated otherwise, the e-Gate is configured so that the selected backdrop is visible in the reference block 62 behind the face appearing in the live photo taken at 47, but is not visible in said reference block when the e-Gate is cheated by having the eMRTD scanned at 47 instead of having said life portrait photograph acquired.

Preferably, the reference block 62 can have the form of a square or a rectangle. This shape makes it easier to define the pixels comprised in the block by, *e.g.* the coordinates of an angle of the block, and length and width values of the square or rectangle.

If the face recognised from the live photograph fails to match the face of the legitimate user as stored in the eMRTD chip, or if the detected background of the live image fails to match the selected backdrop, the user will be seen by an operator in the traditional manual process, at 50. In other words, the failure will be dealt with by the operator and/or any assisting personnel, with the possible intervention of a border officer and/or security officers as the case may be.

Else, the automated control process proceeds further, and eventually the traveller can successfully get out of the e-Gate and thus be allowed to pass through the border checking point. Depending on the specific application, additional checks can be performed before this outcome is reached, for instance database checks using either the biometric data or the biographic data, or both, which have been extracted from the eMRTD at 41. This does not belong, however, to the method of automatically verifying the identity of a person holding an eMRTD as per the present embodiments, and thus will not be specifically described here.

To summarize embodiments of the invention, it will be appreciated that, if a passport data page has been shown to the camera when the live photograph has been taken, the background just behind the person would look white and the e-Gate could detect that something is wrong even if the facial detection process gives a matching result. It is only if both the acquired live portrait photograph of the person presenting the identity document matches the portrait image retrieved from said identity document and the backdrop used for acquiring the live portrait photograph of the person matches the backdrop of the acquired live portrait photograph, the person is determined to be the legitimate holder of the eMRTD.

Using a random backdrop makes it improbable that an impostor prepares beforehand a small photo with the same background. Indeed, the person standing in the gate cannot know beforehand which backdrop the machine will set.

This invention thus improves the reliability of automatic border control gates by preventing one way of cheating the e-Gate.

Thanks to embodiments of the invention, a single border officer can simultaneously monitor several e-Gates reliably and without great effort.

Advantageously, the gate manufacturer could further use specifically chosen colors for additional purposes, e.g. for increasing contrast between white hair of elderly people and the background.

Figures 6A and 6B show examples of the selected backdrop which appears on the display 51 of Figure 5A or on the panel 52 of Figure 5B, for instance, while the live photograph of the traveller 1 is being taken. In these examples, the backdrop 61 is defined by respective solid-colors, for instance light grey and dark grey, respectively. This example of greyscale colors is convenient for illustrative purpose in the context of the present description and drawings, but is of course not limitative of the invention. Any set solid-colors and any set or color tone variations which can effectively be distinguished by implementation of conventional image sensing techniques, may be convenient.

Thus, with reference to the examples as shown in Figures 6C and 6D, the set of different backdrops can further comprise machine-identifiable patterns such as mottled patterns, striped patterns, lattice patterns, etc. For instance, Figures 6C and 6D show a square lattice and horizontal stripes, respectively.

Finally, the set of backdrops can be comprised of combinations of a color and a pattern. In the example shown in Figure 6E, for example, the backdrop 61 is a combination of the color as shown in Figure 6A with the pattern as shown in Figure 6C. Similarly, the backdrop 61 of Figure 6F is a combination of the color as shown in Figure 6B with the pattern as shown in Figure 6D.

To summarize, the set of different backdrops comprises backdrops with respective combinations of one solid color out of a set of different machine-identifiable solid colors and one pattern out of a set of different machine-identifiable patterns.

While embodiments have been described in the context of e-Gates intended for passenger security control carried out in international airports, it will be appreciated that the invention can be implemented in electronic control gates used at border crossing points of any different type, for instance in seaports installations. More generally, it can be used in any security control point where imposture must be prevented, for instance in order to prevent unauthorized persons to go through automated security checks aimed at protecting access restricted areas or buildings.

The present invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

A person skilled in the art will readily appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

## Claims

1. Method of automatically and sequentially verifying identity of persons each holding an electronic Machine-Readable Travel Document, eMRTD, said method comprising:
- retrieving (44) from an identity document (14) presented by a person (1) the identity of whom is to be verified, information associated to a legitimate holder of the eMRTD, said identity information including a portrait image of said legitimate holder digitally stored on the eMRTD;
- digitally acquiring (47) at least one live portrait photograph of the person, using a backdrop (61) which is selected (46) from a set of different backdrops, each time for one photograph acquisition only;
- comparing (48) the acquired live portrait photograph of the person holding the eMRTD with the portrait image retrieved from said eMRTD, by performing a facial recognition process on said live portrait photograph and said portrait image, in the digital domain;
- comparing (49) the backdrop used for acquiring the live portrait photograph of the person holding the eMRTD with the backdrop of the acquired live portrait photograph; and
- determining that the person holding the identity document is the legitimate holder of the eMRTD if, and only if both steps of comparing give a matching result.

2. The method of Claim 1, wherein the backdrop is randomly changing from one live photograph acquisition to the other, in a sequence of live photograph acquisitions.

3. The method of claim 1 or 2, wherein the live portrait photograph of the person is acquired while the selected backdrop is being displayed on a display (51) screen behind said person, with respect from a camera (16) used for the live photograph acquisition.

4. The method of claim 1 or 2, wherein the live portrait photograph of the person is acquired while the selected backdrop is being projected on a panel (52) behind said person, with respect from a camera (16) used for the live photograph acquisition.

5. The method of any one of claims 1 to 4, wherein the set of different backdrops comprises backdrops with respective machine-identifiable solid colors.

6. The method of any one of claims 1 to 4, wherein the set of different backdrops comprises backdrops with respective machine-identifiable patterns.

7. The method of any one of claims 1 to 4, wherein the set of different backdrops comprises backdrops with respective combinations of one solid color out of a set of different machine-identifiable solid colors and one pattern out of a set of different machine-identifiable patterns.

8. The method of any one of the preceding claims, wherein comparing (49) the backdrop used for acquiring the live portrait photograph of the person holding the identity document with the backdrop of the acquired live portrait photograph comprises processing a reference block (62) of the live photograph corresponding to the background.

9. The method of any one of the preceding claims, wherein the portrait image of the legitimate holder of the identity document is retrieved from an eMRTD chip.

10. The method of Claim 9, wherein the eMRTD chip is a contactless chip.

11. The method ofany one of the preceding claims, wherein the eMRTD is a biometric e-Passport and the method is implemented at an Automated Border Control, ABC, gate (10).

12. A computer program product comprising one or more stored sequences of instructions that are accessible to a processor (50) and which, when executed by the processor, cause the processor to carry out the steps of any of Claims 1 to11.

13. Automated system for sequentially verifying identity of persons each holding an electronic Machine-Readable Travel Document, eMRTD, said system comprising:
- a document reader (15) adapted to retrieve from an eMRTD (14) presented by a person (1) the identity of whom is to be verified, information associated to a legitimate holder of the eMRTD, said identity information including a portrait image of said legitimate holder digitally stored on the eMRTD;
- a camera (16) adapted to digitally acquire at least one live portrait photograph of the person,
- computer means (50) adapted to:
- select a backdrop from a set of different backdrops, said backdrop being used each time for one photograph acquisition only;
- compare the acquired live portrait photograph of the person holding the identity document with the portrait image retrieved from said eMRTD, by performing a facial recognition process on said live portrait photograph and said portrait image, in the digital domain;
- compare the backdrop used for acquiring the live portrait photograph of the person holding the eMRTD with the backdrop of the acquired live portrait photograph; and
- determine that the person holding the eMRTD is the legitimate holder of the identity document if, and only if both steps of comparing give a matching result.
